# EUROPEAN PATENT APPLICATION

(11) **EP 0 945 638 A2**
(43) Date of publication of application: **29.09.1999**
(21) Application number: 99105866.0
(22) Date of filing: 23.03.1999
(51) Int. Cl.: F16D 51/16

(54) **A drum brake device**

(30) Priority: 23.03.1998 JP 9403298
(71) Applicant: NISSHINBO INDUSTRIES INC., Chuo-ku, Tokyo (JP)
(72) Inventor: Hasegawa, Junichi, c/o Nisshinbo Industries Inc., Nagoya-shi, Aichi (JP)
(74) Representative: Sajda, Wolf E., Dipl.-Phys.

(57) **Abstract**

A drum brake device is disclosed which comprises a single brake shoe (3) which provides a stable braking effect by tending to equalize the braking effect when the vehicle is moving forward and backward without losing any self-servo property when a vehicle equipped therewith is moving forward or backward. Additionally, the device avoids damages to a brake pipe connected to the drum brake device due to objects such as flying gravel, debris and the like by locating the wheel cylinder (12) in an upper portion of the brake device. Furthermore, the structure enables the run of the parking brake cable (24) to be directed entirely toward the front of the vehicle. One of two anchors (10,14) is positioned so that the distance from a horizontal straight line through the brake center (O) and across the brake shoe (3) to the anchor (10,14) is shorter than the distance from the line to the other anchor (14,10). The one anchor (14) is a pivot shoe anchor and the other anchor is a floating (10) shoe anchor.

## Description

The present invention relates to a drum brake device, in particular a drum brake device for the rear wheel of a vehicle, wherein the drum brake device comprises a single brake shoe which functions as a leading shoe with self-servo property when the vehicle equipped therewith is either moving forward or when it is moving backward.

Japanese patent application, publication No. Heisei 9-324 829, illustrates a drum brake device which comprises a single brake shoe with a self-servo property when a vehicle is moving either forward or backward.

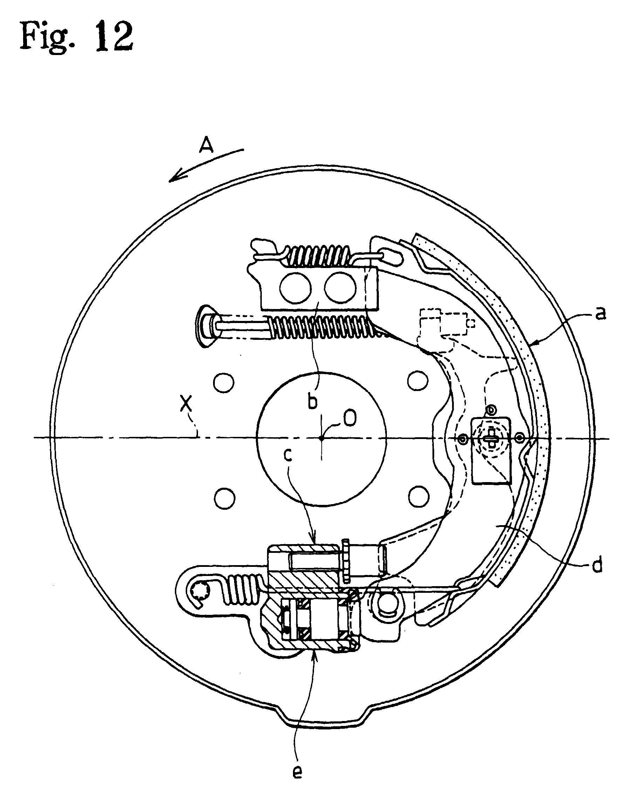

An example of this type of drum brake device is explained below with reference to Fig. 12 of the drawings. In Fig. 12, a single brake shoe a is movably mounted on a back plate. An upper portion of the brake shoe a engages with an anchor b. A lower portion of the brake shoe a engages with a shoe clearance adjustment device c.

Furthermore, a link d is provided which is rotatably pivoted at the central region of the brake shoe a. The upper portion of the link d functionally engages with the anchor b. The lower portion of the link d abuts against a service brake actuator e which is put in operation when a service brake is activated.

The upper portion of the brake shoe a is supported by the anchor b when the brake drum rotates in one direction which is indicated by the arrow A in Fig. 12. The lower portion of the brake shoe a is supported by the shoe clearance adjustment device c when the brake drum rotates in the reverse direction, opposite to the arrow A.

There are two points which must be considered when designing a drum brake device for a vehicle. Firstly, it is desirable that a brake fluid pipe to be connected to a wheel cylinder is kept at a distance from the road surface which is as great as possible in order to avoid any damages of the pipe due to flying gravel, debris and the like.

Secondly, in a vehicle equipped with a drum brake device, the driver can be confronted with a dangerous situation if the rear wheels of the vehicle lock before the front wheels. Therefore, it is important to avoid such a situation.

In addition, when considering a conventional device as shown in the drawing, if the brake shoe functions as a floating shoe when the brake drum rotates in any direction, it is well known that the braking effect can be increased as the distance from a horizontal straight line X across the center of the brake to the supporting point of the brake shoe becomes shorter. If the dimensions or size relative to the braking effect is the same, it is well known that the braking effect of a pivot shoe rather than a floating shoe is lower if the drum brake device is designed as an ordinay type. Details thereof are described in "BRAKE DESIGN AND SAFETY", by Rudolf Limpert, SAE International, pages 61 to 75, and "Tire, Brake" of "Automobile Engineering Encyclopedia", Sankaido.

It results from the above explanations that the wheel cylinder of the drum brake device according to Fig. 12 may be located at the upper portion of the device when applied to the right wheel side of the vehicle, thereby securing the braking effect of the vehicle moving backward and arranging the run of a parking brake cable to be directed toward the front of the vehicle. However, the available space for arranging the shoe clearance adjustment device supporting the brake shoe when moving forward becomes limited. Hence, it becomes difficult to design a device wherein the problem is eliminated that the rear wheels are locked first.

The invention was made to resolve the problems discussed above. In particular, the object of the present invention is to provide a drum brake device which realizes a stable braking effect by tending to equalize the braking effects when the wheels equipped with the drum brake device move forward or backward without losing the self-servo property.

Another object of the present invention is to provide a drum brake device which avoids positioning liable to damage the brake fluid pipe due to flying gravel, debris and the like and which enables the pull of a parking brake cable to be pulled directly toward the front of the vehicle.

According to the present invention, a drum brake device is disclosed which comprises the following components: a back plate; first and second anchor members mounted on the back plate; a single brake shoe movably mounted on the back plate, wherein the one end of the brake shoe functionally engages with the first anchor member through abutment against the first anchor member and the other end of the brake shoe functionally engages with the second anchor member through the abutment against the second anchor member; a service brake actuator, which is activated when a service brake is applied, mounted on the back plate; a supporting member mounted on the back plate; a link pivotably supported at the pivot point of the central region of the brake shoe, wherein the one end of the link functionally engages with the service brake actuator, which is activated when a service brake is applied, while the other end of the link is supported by the supporting member; wherein the operation force of the service brake actuator, which acts on the link, is transferred to the brake shoe through the pivot component of the link; wherein one of the first or the second anchor member functions as a pivot anchor when the distance from a horizontal straight line through the center of the brake and across the brake shoe to one of the first or the second anchor member is shorter than the distance from the horizontal straight line to the other anchor member; and wherein the other anchor member functions as a floating one.

According to a further development of the drum brake device according to the invention, shoe clearance adjustment means, which adjust a clearance between the brake drum and the brake shoe, are provided at either the first anchor member or the second anchor member.

According to a further development of the drum brake device according to the invention, the shoe clearance adjustment means automatically sense the amount of opening by which the brake shoe opens and adjust the clearance between the brake drum and the brake shoe.

In a specific embodiment according to the invention, the drum brake device comprises a parking brake actuator, which is operated when a parking brake is activated and which is mounted so that one side of the link is adapted to be opened.

According to a further development of the drum brake device according to the invention, a shoe return spring is provided, wherein the moment of the shoe return spring which pivots at the pivot point of the link engaging with the brake shoe is predetermined in such a manner that the moment at the anchor side is larger than the moment at the other side when a vehicle equipped with the drum brake device is moving forward.

In a specific embodiment of the drum brake device according to the invention, the supporting member supporting the other side of the link is shared with the anchor supporting the brake shoe.

Further objects, features and advantages of the invention will be readily apparent from the detailed description of preferred embodiments described below with reference to the accompanying drawings.
- Fig. 1: is a plan view of a first embodiment of the drum brake device according to the invention;
- Fig. 2: is a cross-section view of the embodiment in Fig. 1 taken along the line II-II in Fig. 1;
- Fig. 3: is a cross-section view of the embodiment in Fig. 1 taken along the line III-III in Fig. 1;
- Fig. 4: is a cross-section view of the embodiment in Fig. 1 taken along the line IV-IV in Fig. 1;
- Fig. 5: is a cross-section view of the embodiment in Fig. 1 taken along the line V-V in Fig. 1;
- Fig. 6: is a diagrammatic view of the first embodiment illustrating the moment operating on the brake shoe;
- Fig. 7: is a plan view of a second embodiment of the drum brake device according to the invention;
- Fig. 8: is a plan view of an adjustment lever used in the embodiment according to Fig. 7;
- Fig. 9: is a cross-section view of the embodiment in Fig. 7 taken along the line IX-IX in Fig. 7;
- Fig. 10: is a plan view of a third embodiment of the drum brake device according to the invention;
- Fig. 11: is an enlarged plan view of the lower portion of the drum brake device shown in Fig. 10 of the drawings; and
- Fig. 12: is a plan view of a conventional drum brake device on which the present invention is based.

### First Embodiment

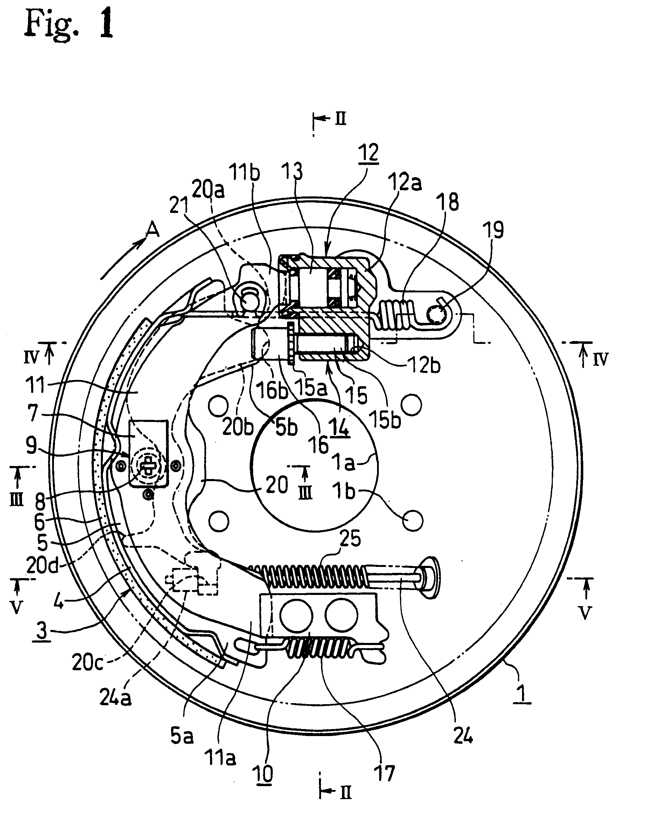

A first embodiment of the invention is described below with reference to Figs. 1 to 6 of the drawings. This embodiment relates to a drum brake device provided at the right wheel side of a vehicle.

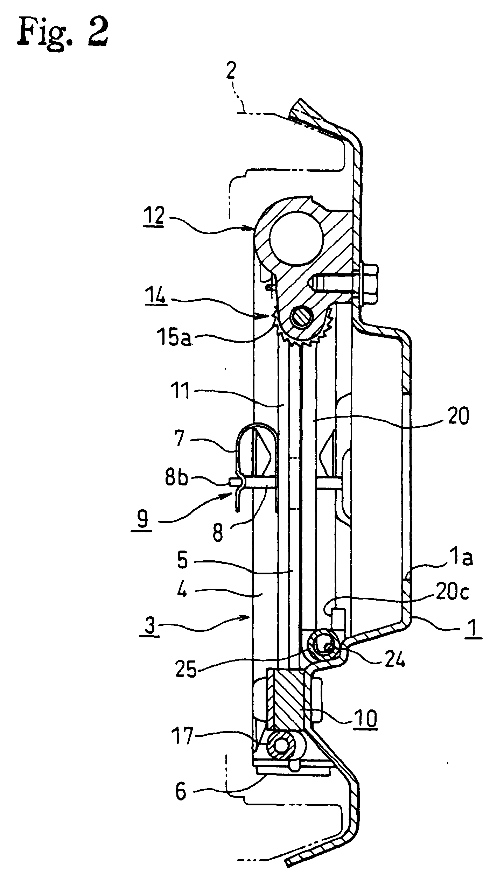

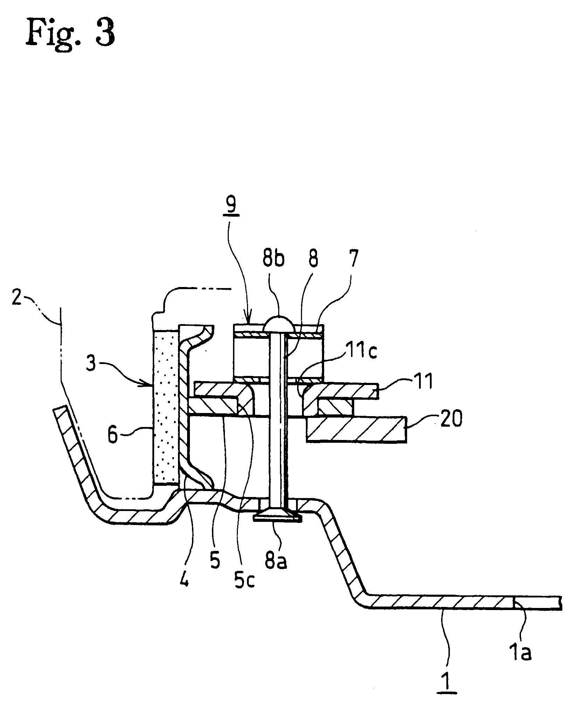

As shown in Figs. 1 and 2 of the drawings, a central hole 1a of a back plate 1 is provided to be freely positioned over the axle of a vehicle and is affixed to the stationary part of the vehicle by means of some bolts, for example four bolts, not shown in the drawing, which are inserted through corresponding bolt holes 1b. A brake drum 2 faces the back plate 1 and rotates together with a wheel. The brake drum 2 is shown diagrammatically by a two-point chain line in Figs. 2 and 3 of the drawings.

A single brake shoe 3 has a configuration with a shoe rim 4, a shoe web 5 joined to the rim 4 to form a "T" in cross-section, and a lining 6 affixed around the outer surface of the shoe rim 4 and adapted to frictionally engage with the brake drum 2 to produce a braking action. Details are shown in Figs. 2 and 3 of the drawings.

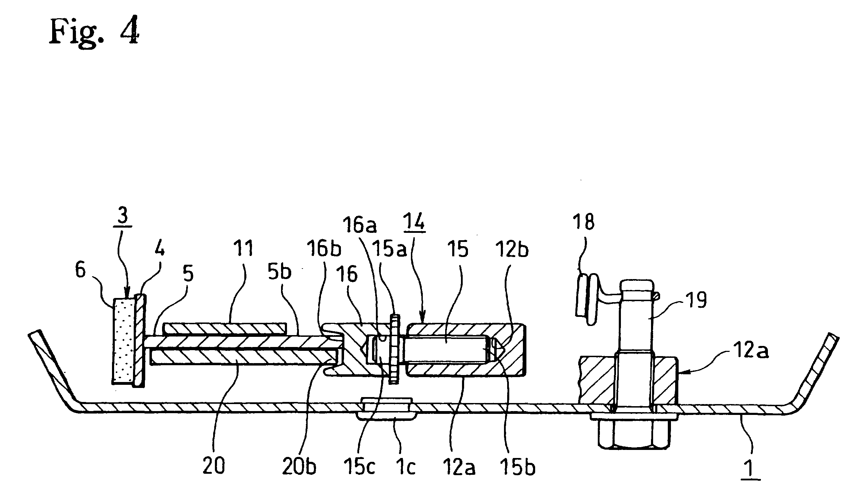

The brake shoe 3 is mounted on top of the back plate 1 by a shoe-hold mechanism 9 which is known as such and which includes a plate spring 7 and a shoe-hold pin 8. The lower end 5a of the shoe web 5 slidably contacts with and abuts against the flat surface of an anchor 10 functioning as a first anchor member, while the other end 5b of the shoe web 5 slidably abuts against a shoe clearance adjustment device 15 which also serves as a second anchor member. This shoe clearance adjustment device 14 has a capacity of adjusting the clearance between the brake drum 2 and the brake shoe 3 as described later. These details are shown in particular in Figs. 1 and 4 of the drawings.

A link 11 is superimposed on the surface of the shoe web 5 and has a lower end 11a which abuts against the first anchor member 10, see Fig. 1.

The first anchor member 10 of this embodiment functions as a supporting member for the brake shoe 3 and the link 11. However, a supporting member for the brake shoe 3 and a supporting member for the link 11 may also be provided separately. The upper end 11b of the link 11 engages with a piston 13 of a wheel cylinder 12 which may be a one-side-open-type wheel cylinder which functions as a service brake actuator which is activitated when the service brake is operated.

The link 11 is rotatably pivoted on the shoe web 5 via the shoe-hold mechanism 9 comprising the plate spring 7 and the shoe-hold pin 8. Fig. 3 shows the pivot mechanism for the link 11. A hollow protuberance 11c, formed as a burr by means of a press, is integrally formed in the central region of the link 11. The hollow protuberance 11c is pivotably mounted in a hole 5c bored in the shoe web 5.

A head segment 8a of the shoe-hold pin 8 engages with a hole in the back plate 1, while a latch segment 8b of the shoe-hold pin 8 penetrates freely through the hollow protuberance 11c of the link 11 and engages the plate spring 7 mounted on top of the link 11. The elastic force of the plate spring 7 elastically secures the link 11 to the shoe web 5.

The shoe clearance adjustment device 14, which is shown in Fig. 1 of the drawings, supports the upper end 5b of the shoe web 5 and is adapted to adjust the clearance between the brake drum 2 and the lining 6. The shoe clearance adjustment device 14 comprises an adjustment bolt 15 screwed into a cavity in a cylinder body 12a of the wheel cylinder 12 and a sleeve 16.

The shoe clearance adjustment device 14 is illustrated in detail in Fig. 4 of the drawings. A female thread 12b is formed inside a cavity molded in parallel to a piston 13 (see Fig. 1) inside the cylinder body 12a. A screw stem 15b on one end of the adjustment bolt 15 is screwed into the female thread 12b, while the other stem end 15c of the adjustment bolt is inserted so as to rotate inside a blind hole 16a of the sleeve 16. A toothed adjustment wheel 15a is set in the central region of the adjustment bolt 15.

A convex-shaped notched groove 16b, which is shown with a dotted line in Fig. 1 of the drawings, or a concave-shaped bottom surface is provided at the end of the sleeve 16. The upper end 5b of the shoe web 5 contacts with the bottom surface of the notched groove 16b leaving a slight clearance between a brake lever 20, to be described below, and the bottom surface of the notched groove 16b.

It is apparent from the above description of the brake shoe supporting system using the anchor 10 and the shoe clearance adjustment device 14 as the first and second anchor members that the brake shoe 3 functions as a floating shoe when the brake shoe 3 is supported at the first anchor member 10 side at the brake in operation since the brake shoe 3 stays along the sliding surface of the brake drum 2.

When the brake shoe 3 is supported on the second anchor member 14 side, the brake shoe 3 functions as a pivot shoe since the brake shoe 3 opens with the pivot point at the center of the bottom surface of the notch 16a in the second anchor member 14.

As shown in Fig. 1 of the drawings, a first shoe return spring 17 is stretched between the lower end 5a of the shoe web 5 and a certain portion of the anchor 10. A second shoe return spring 18 is stretched between the upper end 5b of the shoe web 5 and a bolt 19 which bolts the wheel cylinder 12 on the back plate 1.

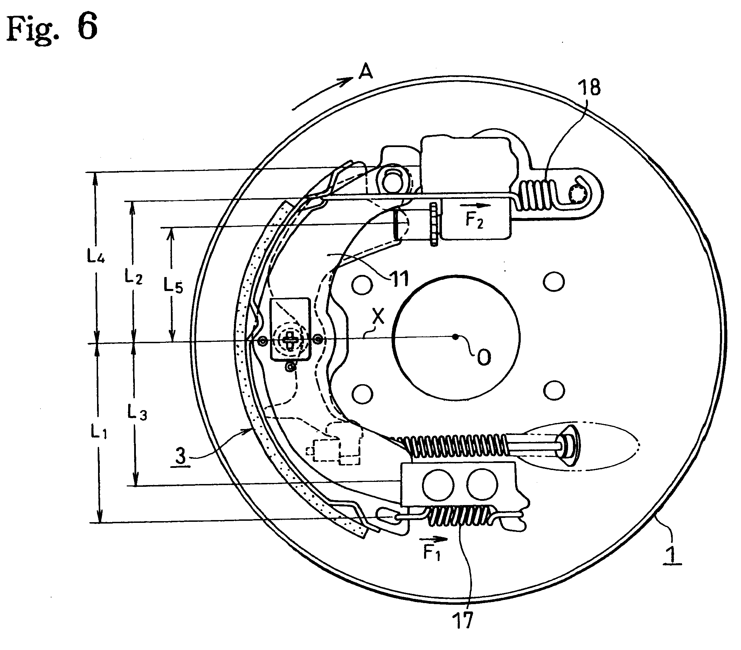

The first and the second shoe return spring 17 and 18 are set so as to satisfy the following relational formula for a torque acting on the brake shoe 3 when the brake drum 2 rotates in the direction marked by the arrow A in Fig. 6 of the drawings when the brake drum 2 is advancing forward:$\text{F1 x L1 < F2 x L2}$ wherein:
- F1 =: Mounted load of the lower first shoe return spring 17
- F2 =: Mounted load of the upper second shoe return spring 18
- L1 =: Distance between the pivot point of the brake shoe 3 with the link 11 and the lower first shoe return spring 17
- L2 =: Distance between the pivot point of the brake shoe 3 with the link 11 and the upper second shoe return spring 18

In other words, the first and second shoe return springs 17 and 18 are set such that, with the fulcrum being the pivot point with the link 11, the moment acting on the brake shoe 3 will be greater on the rotation-exit side of the brake shoe 3 than on the rotation-entry side. This is to prevent imposing an impact load between the brake shoe 3 and the anchor member by preventing the separation of the rotation-exit side of the brake shoe 3 from the anchor member relative to the rotational direction A of the brake drum 2 when it is moving forward which is the overwhelmingly more frequent action.

Furthermore, even when the brake lever 20 is adjusted to rather be pulled, thereby creating a slight opening of the brake shoe 3, the rotation-exit side of the brake shoe 3 does not separate from the second anchor member 14, and the same effect as above may be expected.

Next, a parking brake and a parking brake actuator will be explained with reference to the drawings. As shown in Fig. 1, the brake lever 20 is set on the reverse side of the shoe web 5. A base end 20a of the brake lever 20 is pivotably supported by a pin 21. A central segment 20b adjacent to the base end 20a is engaged with the notched groove 16b of the sleeve 16 with a slight gap, as shown in Fig. 4 of the drawings. A U-shaped groove 20c is bent in the free end of the brake lever 20. A stopper 20d adjacent to the U-shaped groove 20c abuts against the inner face of the shoe rim 4 and regulates the return position of the brake lever 20.

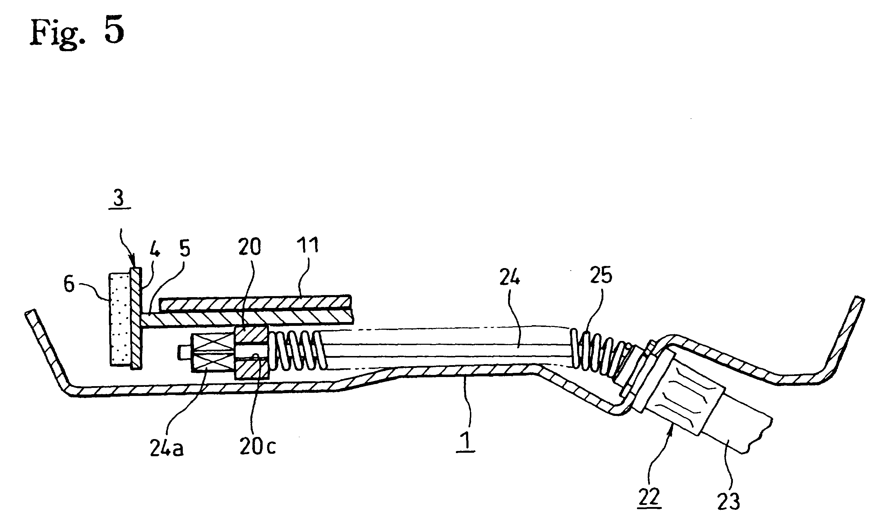

Fig. 5 shows the connection of a remote control parking brake cable 22, wherein one end of an outer casing 23 is attached to the back plate 1, and a nipple end 24a affixed to one end of an inner parking brake cable 24 is latched in the U-shaped groove 20c of the brake lever 20. A coil spring 25 enclosing the inner parking brake cable 24 is compressed between the outer casing 23 and the U-shaped groove 20c, and serves to provide a force between the brake lever 20 and the inner parking brake cable 24.

During a service brake operation, for instance, when the driver presses the brake pedal (not shown), the wheel cylinder 12 is pressurized, whereupon the piston 13 presses against the upper end 11b of the link 11. The link 11 turns with the point of abutment with the first anchor member 10 on the lower end 11a side as the fulcrum, and the protuberance 11c acts on the shoe web 5 to move the brake shoe 3.

At this point, a moment difference arising from the first and second shoe return springs 17 and 18 is acting on the brake shoe 3, whereupon the upper end 5b of the shoe web 5 opens, with the point of abutment against the second anchor member 14 on the lower end 5a side as the fulcrum, forcing the lining 6 against the rotating brake drum 2, and the friction created thereby will brake the vehicle.

Thus, it is clear from the above explanations that the force acting on the brake shoe 3 can easily be changed by the lever ratio of the link 11, see Fig. 6. The lever ratio is defined as follows:$\text{(L3 + L4) / L3 ,}$ wherein:
- L3 =: Distance between the pivot point of the link 11 and the point of support on the lower end 11a side
- L4 =: Distance between the pivot point of the link 11 and the point of action.

If the brake drum 2 is rotating in the direction A as shown in Fig. 1 of the drawings, the upper end 5b of the shoe web 5 is supported by the second anchor member, the shoe clearance adjustment device 14, and acts as a pivot shoe with a self-servo property. Accordingly, the upper end 5b of the shoe web 5 constantly abuts against the second anchor member 14, thus preventing the pivot-exit side of the brake shoe 3 relative to the direction of rotation of the brake drum 2 from separating from the second anchor member 14. Therefore, no impact load between them is created, which may increase the durability of the device, and also no impact noise is caused.

If the brake drum 2 is rotating in the reverse direction, the lower end 5a of the shoe web 5 is supported by the first anchor member 10 and acts as a floating shoe with a self-servo property.

Fig. 6 of the drawings illustrates considerations of designing the layout of a drum brake device, also with respect to connecting the brake fluid pipe to the drum brake device. As shown in Fig. 6, the distance L5 from a horizontal straight line X through the center O of the drum brake device and across the brake shoe 3 to the second anchor member (the shoe clearance adjustment device 14) is set to be much shorter than the distance L3 from the horizontal straight line X through the center O of the drum brake device and across the brake shoe 3 to the first anchor member (the anchor 10).

According to the present invention, the second anchor member (shoe clearance adjustment device 14) closer to the brake center is a pivot type anchor, while the first anchor member (anchor 10) further from the brake center is a floating type anchor. This tends to equalize the braking effects when the vehicle equipped with the drum brake device is either moving forward or backward. This also prevents an excessive braking effect when the vehicle is moving forward, and secures a braking effect when the vehicle is moving backward.

In addition, the drum brake device according to the present invention is expected to have the same effect as a widely known leading-trailing type drum brake device, for example as disclosed in Japanese Patent Official Gazette No. Heisei 1-58374, where a pair of brake shoes are provided which face each other.

The drum brake device according to the present invention tends to equalize the braking effects when moving forward and backward by differentiating the upper and lower anchor types. In addition, damages to a brake fluid pipe, supplying the drum brake device with brake fluid, due to flying gravel, debris and the like are prevented by locating the wheel cylinder 12 at the upper side of the drum brake device. This also facilitates the arrangement of the parking brake cable 24 because it is possible to arrange the parking brake cable 24 to run entirely in the direction of the vehicle front.

In addition, since the brake shoe 3 is a single shoe, the pedal stroke, when the service brake is applied, or the parking lever stroke, when the parking brake is applied, may be reduced to roughly half the value in comparison with the conventional device, thereby providing a more comfortable feeling to the driver. Furthermore, since a single brake shoe 3 is employed, a large space is saved at the right side of the back plate 1 in the configuration of Fig. 1. Other devices, such as sensors for an anti-lock braking system, may easily be installed.

When adjusting the clearance between the lining 6 and the brake drum 2, a plug 1c, shown in Fig. 4 of the drawings, is removed, and a tool, such as a screwdriver, may be inserted from the outside of the drum brake device in order to rotate the toothed adjustment wheel 15a to screw the adjustment bolt 15 in or out.

During a parking brake operation, for instance, by operating the parking brake lever inside the vehicle compartment, the inner parking brake cable 24 is pulled. The brake lever 20 rotates counterclockwise in the configuration of Fig. 1 with the point of abutment with the sleeve 16 of the central segment 20b as the fulcrum. Then, the brake lever 20 is pressed toward the upper end 11b of the link 11 via a pin 21.

Accordingly, as in the service brake operation, the lower end 5a of the brake shoe 3 opens at the pivot point of the upper end 5b side, and the lining 6 frictionally engages with the brake drum 2.

### Second Embodiment

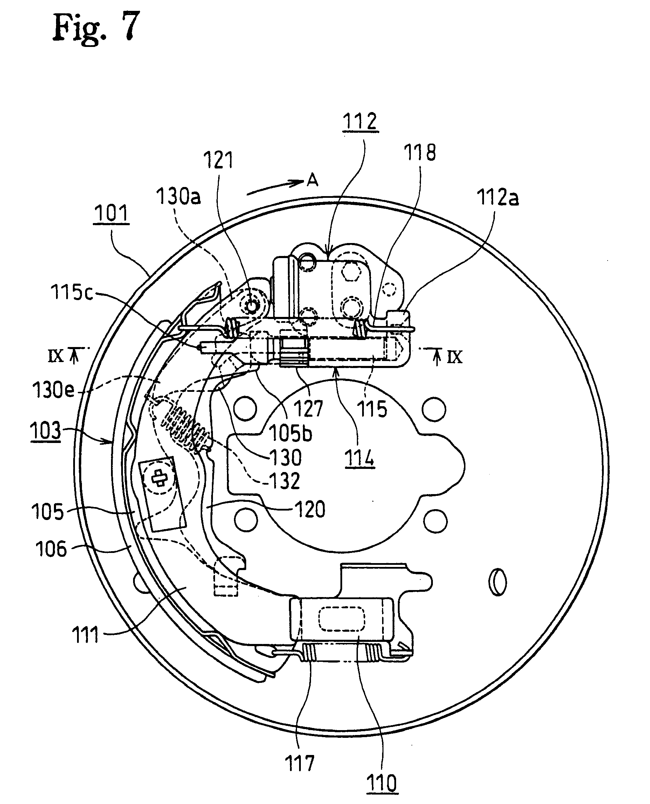

A second embodiment of the drum brake device according to the invention is equipped with an automatic shoe clearance adjustment function and is explained below with reference to Figs. 7 to 9 of the drawings. Those components which are the same as in the first embodiment are identified by corresponding reference signs augmented by 100, in other words 100-series numbers, and detailed explanations thereof will be omitted below.

The components of the second embodiment include a back plate 101, a brake shoe 103, a shoe web 105, a lining 106, an anchor (a first anchor member) 110, a link 111, a wheel cylinder (working as service brake actuator) 112, a first shoe return spring 117, a second shoe return spring 118 and a brake lever (operating as a parking brake actuator) 120.

A shoe clearance adjustment device 114, which also functions as the second anchor member, of this second embodiment includes an adjustment bolt 115 and a toothed nut 127. The adjustment bolt 115 has a screw stem 115b on one end which is screwed into a blind hole 112c formed in a cylinder body 112a, and a notched groove 115d formed at a flattened portion 115c on the other end which supports the shoe web 105, the link 111, and the brake lever 120.

The bottom surface of the notched groove 115d in this second embodiment has a convex circular bottom surface as shown with a dotted line in Fig. 7. An upper end 105b of the shoe web 105 is designed to face and to contact with that bottom surface. The brake shoe 103 functions as a pivot shoe when the brake drum rotates in the direction of the arrow A as in the first embodiment described above.

In addition, the toothed nut 127 is screwed around the screw stem 115b of the adjustment bolt 115, whereby the return position of the brake shoe 103 is restricted by the right side surface of the toothed nut 127 abutting against the opening end surface of the blind hole 112c of the cylinder body 112a. Sawlike teeth 127a are integrally formed at the outer surface of the nut 127.

The upper, second shoe return spring 118 extends between the cylinder body 112a and the brake shoe 103.

The action during braking and the action of the manual shoe clearance adjustment is the same as that for the first embodiment, and an explanation thereof is omitted here.

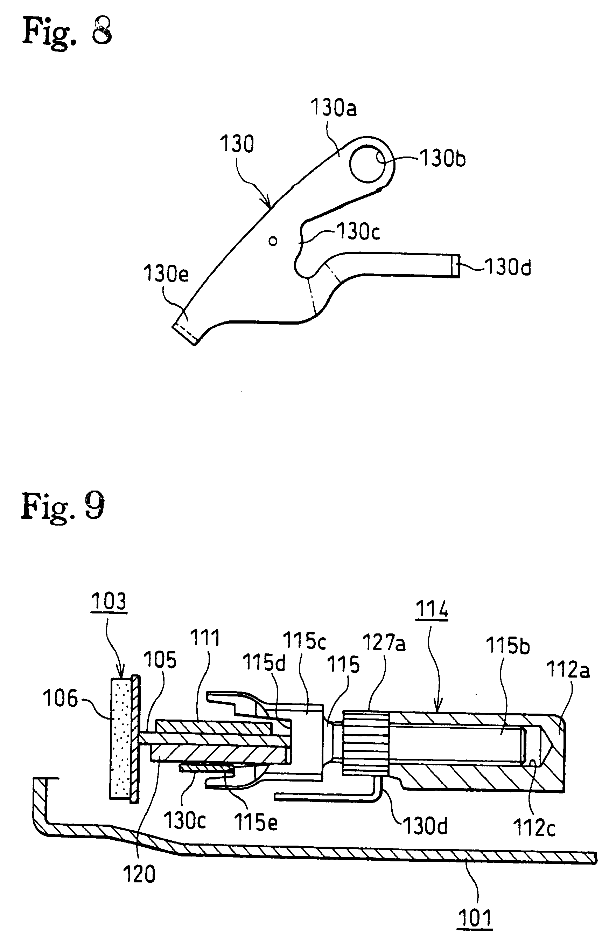

In the second embodiment, the shoe clearance adjustment device 114 is an automatic shoe clearance adjustment device. An adjustment lever 130 is shown in Fig. 8 and comprises a Y-shaped like part provided at the back plate 101 side of the brake lever 120. A hole 130b at the end of one arm 130a is pivotably supported at a pin 121 supporting the brake lever 120 at the link 111.

A central portion 130c of the adjustment lever 130 engages with a stepped surface 115e of the notched groove 115d of the adjustment bolt 115 as shown in Fig. 9 of the drawings. Another arm 130d engages with the teeth 127a of the toothed nut 127.

A further arm 130e is provided opposite to the first arm 130a. An adjustment spring 132 extends between the further arm 130e of the adjustment lever 130 and the brake lever 120. Fig. 7 shows the situation and illustrates how a counterclockwise spring force is applied to the adjustment lever 130 wherein the pin 121 operates as the fulcrum.

When the service brake is operated to open the link 111 with the first anchor member 110 as the fulcrum, the pin 121 moves together with the link 111. At this time, the energizing force of the adjustment spring 132 presses the central portion 130c of the adjustment lever 130 against the stepped surface 115e of the notched groove 115d of the adjustment bolt 115. In this manner, the other arm 130d is caused to rotate in the counterclockwise direction as shown in Fig. 7 of the drawings.

If the lining 106 is wearing out, the degree of opening of the link 111 increases thereby. Hence, when the degree of rotation of the other arm 130d of the adjustment lever 130 exceeds the pitch of the saw-like teeth 127a, the adjustment bolt 115 is automatically adjusted by being screwed out of the nut 127 in an amount sufficient to keep a constant clearance between the brake drum and the lining 106.

When the parking brake is applied, the operation force of the brake lever 120 increases the thrusting force against the shoe clearance adjustment device 114, but the adjustment spring 132 is not sufficiently energized to overcome that force, resulting in that no clearance adjustment is made.

### Third Embodiment

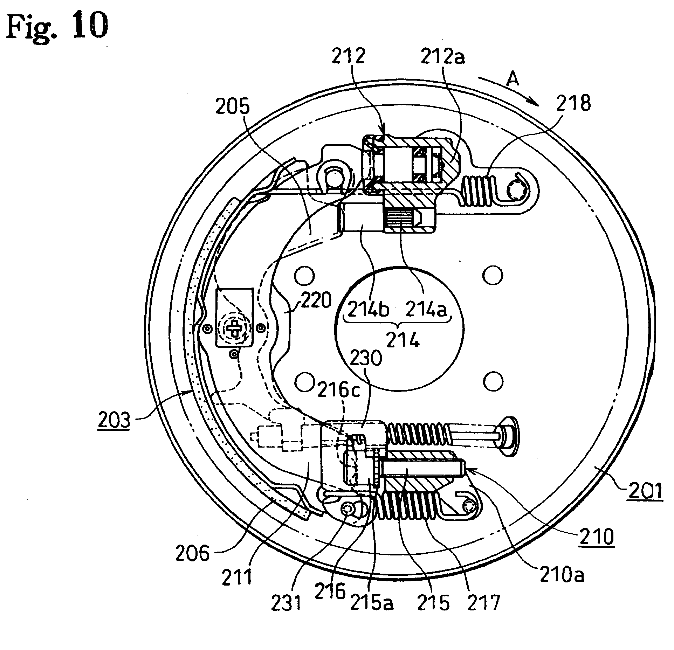

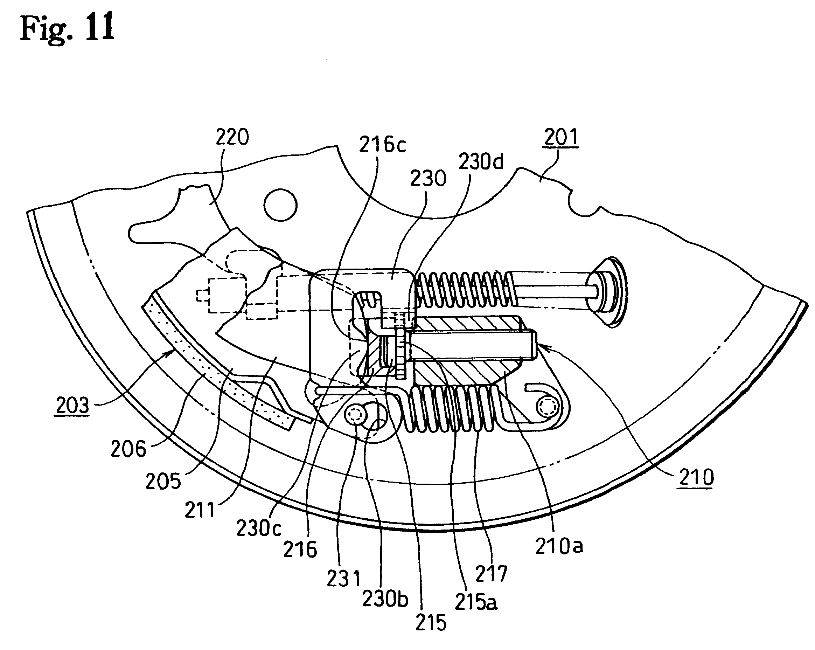

A third embodiment of the drum brake device according to the invention is explained below with reference to Figs. 10 and 11 of the drawings. Those components which are the same as in the first embodiment, are identified by corresponding reference signs augmented by 200, in other words by a 200-series number, and a detailed explanation thereof will be omitted here.

A difference between the third embodiment and the first and second embodiments described above resides in that a shoe clearance adjustment device, which adjusts the clearance between a brake drum and a brake shoe 203, i.e. the automatic shoe clearance adjustment device to automatically adjust the clearance, is provided at the lower first anchor member 210.

In this third embodiment, a second upper anchor member 214 has a stepped-pin device wherein a small diameter axle portion 214a is inserted and press-fitted into a cavity formed in a cylinder body 212a of a wheel cylinder 212 to support a shoe web 205 with a bottom surface of a concave notched groove formed in a larger diameter axle portion 214b.

As shown in the enlarged diagram of Fig. 11, the shoe clearance adjustment device of this embodiment comprises an anchor block 210a fixed on a back plate 201 by bolts or the like, an adjustment bolt 215, having a male threaded part at one end to be screwed, and a sleeve 216 rotatably engaged with the other end of the adjustment bolt 215. A toothed adjustment wheel 215a is integrally provided at the center of the adjustment bolt 215.

In addition, the end surface of the shoe web 205 and a link 211, respectively, slidably abut against the bottom flat surface of a notched groove 216c formed at the end of the sleeve 216.

A barrel-shaped hole 230b of the adjustment lever 230 is rotatably supported with a pin 231 placed adjacent to the lower end of the shoe web 205 as the fulcrum. A central segment 230c of the adjustment lever 230 abuts against and engages with the bottom surface of the notched groove 216c of the sleeve 216. A top end 230d of the adjustment lever 230 engages with the toothed adjustment wheel 215a of the adjustment bolt 215.

In addition, a first shoe return spring 217 of this third embodiment extends between the adjustment lever 230 and a pin provided on the anchor block 210a. The return force of the first shoe return spring 217 is acting on the brake shoe 230, and the spring force in the clockwise direction at the pin 231 as the fulcrum is acting on the adjustment lever 230.

Furthermore, the structure and operation of the service brake actuator, i.e. the wheel cylinder 212, and the parking brake actuator, i.e. the brake lever 220, and the effect of the moment acting on the brake shoe 203 due to the first and second shoe return springs 217 and 218, are the same as in the first and second embodiments. Therefore, a detailed explanation thereof will be omitted here.

Moreover, the service brake operation and the parking brake operation are the same so that a detailed explanation thereof will be omitted here as well.

When the service brake and/or the parking brake are/is in operation, the anchor 210 side of the brake shoe 203 opens depending upon the moment difference between the first shoe return spring 217 and the second shoe return spring 218. At this time, the adjustment lever 230 rotates clockwise with the sleeve 216 as the fulcrum.

If the lining 206 wears out and the degree of rotation of the adjustment lever 230 exceeds the pitch of the toothed adjustment wheel 215a, the adjustment bolt 215 is automatically adjusted by an amount sufficient to keep a constant clearance between the brake drum and the lining 206.

The invention is by no means limited to the embodiments described above. For example, the position of the brake lever and the link relative to the shoe web may be reversed; also, the force of the adjustment spring may be increased, which enables the shoe clearance to be automatically adjusted when the parking brake is activated. The possibility of many other variations will be evident to those people technically skilled in this industry.

The anchor member, supporting the end of the single brake shoe, which is closer to the brake center, is a pivot shoe anchor. The anchor member which is further from the brake center is a floating shoe anchor. This tends to equalize the braking effects when the vehicle equipped with the drum brake device is moving forward and backward, thereby avoiding any excessive effect of the brake when moving forward, and securing the braking effect when moving backward.

Only switching the type of the pair of anchor members needs to be done. This facilitates the design and the making of the layout of the drum brake device.

The invention is not only effective in tending to equalize the braking effects when the vehicle is moving forward and backward, but also in preventing any damages which are possibly caused by such problems as flying gravel, debris and the like, by locating the wheel cylinder at the upper side of the brake device. The invention also facilitates the arrangement of the parking brake cable since it may be oriented to run and be pulled entirely toward the front of the vehicle.

A single brake shoe improves the feeling of the driver when pressing on the brake pedal, and parking lever action because the brake pedal and parking lever stroke may be reduced to approximately half the value of a conventional leading-trailing type drum brake.

An open space may be kept in the area facing the brake shoe of the back plate, which facilitates the installation of other devices, such as sensors for an anti-lock braking device.

The structure according to the present invention also prevents imposing an impact load by the shoe against the anchor member by ontinuously maintaining the abutment of the anchor member when a forward movement takes place which is clearly a more frequent action and tends to be used in a high speed situation where a high braking reduction is needed.

Further, no impact noise is created which is caused in conventional devices when the brake shoe collides with the anchor member. This prevents creating an uncomfortable feeling to the driver.

It is readily apparent that the invention described above has the advantage of wide commercial utility. It should be understood that the specific forms of the invention described above are intended to be representative only, because certain modifications within the scope of these teachings will be readily apparent to those skilled in the art.

## Claims

1. A drum brake device, comprising
- a back plate (1, 101, 201);
- a pair of anchors (10, 14; 110, 114; 210, 214) mounted on the back plate (1, 101, 201);
- a single brake shoe (3, 103, 203) movably mounted on the back plate (1, 101, 201) wherein the one end of the brake shoe (3, 103, 203) functionally engages with one anchor (10, 110, 210) through the abutment against one anchor (10, 110, 210) and the other end of the brake shoe (3, 103, 203) functionally engages with the other anchor (14, 114, 214) through the abutment against the other anchor (14, 114, 214);
- a service brake actuator (12, 112, 212), which is activated when a service brake is applied, mounted on the back plate (1, 101, 201);
- a supporting member mounted on the back plate (1, 101, 201);
- a link (11, 111, 211) pivotably supported at the pivot point of the central region of the brake shoe (3, 103, 203), wherein the one end of the link (11, 111, 211) functionally engages with the service brake actuator (12, 112, 212), which is activated when a service brake is applied, while the other end of the link (11, 111, 211) is supported by the supporting member,
- wherein the operation force of the service brake actuator (12, 112, 212) , which acts on the link (11, 111, 211), is transferred to the brake shoe (3, 103, 203) through a pivot component of the link (11, 111, 211),
- wherein one of the first or the second anchor (10, 14; 110, 114; 210, 214) functions as a pivot anchor when the distance (L5) from a horizontal straight line through the center (O) of the brake and across the brake shoe (3, 103, 203) to the one of the first or the second anchor (10, 14; 110, 114; 210, 214) is shorter than the distance (L3) from the horizontal straight line to the other anchor (10, 14; 110, 114; 210, 214), and
- wherein the other anchor (10, 14; 110, 114; 210, 214) functions as a floating

2. The drum brake device according to claim 1,
wherein shoe clearance adjustment means (14, 114, 210), which adjust a clearance between the brake drum (2) and the brake shoe (3, 103, 203), are provided at either one or the other anchor (10, 110, 210, 14, 114, 214).

3. The drum brake device according to claim 2,
wherein the shoe clearance adjustment means (14, 114, 210) automatically sense the amount of opening by which the brake shoe (3, 103, 203) opens and adjust the clearance between the brake drum (2) and the brake shoe (3, 103, 203).

4. The drum brake device according to any of claims 1 to 3, which further comprises a parking brake actuator (20, 120, 220), which is operated when a parking brake is activated and which is mounted so that one side of the link (11, 111, 211) is adapted to be opened.

5. The drum brake device according to any of claims 1 to 4, which further comprises a shoe return spring (17, 18; 117, 118; 217, 218),
wherein the moment of the shoe return spring (17, 18; 117, 118; 217, 218) which pivots at the pivot point of the link (11, 111, 211) engaging with the brake shoe (3, 103, 203) is predetermined in such a manner that the moment at the anchor side is larger than the moment at the other side when a vehicle equipped with the drum brake device is moving forward.

6. The drum brake device according to any of claims 1 to 5,
wherein the supporting member supporting the other side of the link (11, 111, 211) is shared with the anchor supporting the brake shoe (3, 103, 203).

7. The drum brake device according to any of claims 1 to 6,
wherein the service brake actuator (12, 112, 212) is a one-side-open-type wheel cylinder.

8. The drum brake device according to any of claims 1 to 7,
wherein the wheel cylinder (12, 112, 212) is mounted at the upper side of the drum brake device.
